# FASCICULE DE BREVET EUROPEEN

(11) **EP 3 723 970 B1**
(45) Date de publication et mention de la délivrance du brevet: **11.12.2024**
(21) Numéro de dépôt: 18839824.2
(22) Date de dépôt: 13.12.2018
(51) Int. Cl.: B29C 33/72, B29D 30/06, B25J 5/00, G05D 1/00, B25J 11/00, B25J 19/02, B24C 1/00, B24C 3/06, B24C 3/32

(54) **PROCÉDÉ ET APPAREIL DE NETTOYAGE D'UN MOULE DE VULCANISATION**
VERFAHREN UND VORRICHTUNG ZUM REINIGEN EINER VULKANISIERUNGSFORM
METHOD AND APPARATUS FOR CLEANING A VULCANISING MOULD

(30) Priorité: 14.12.2017 FR 1762145
(43) Date de publication de la demande: 21.10.2020
(73) Titulaire: COMPAGNIE GENERALE DES ETABLISSEMENTS MICHELIN, 63000 Clermont-Ferrand (FR)
(72) Inventeur: DETTORE, Jean-Marie, 63040 CLERMONT-FERRAND Cedex 9 (FR); DENIAU, Quentin, 63040 CLERMONT-FERRAND Cedex 9 (FR); DRAGO, Frédéric, 63040 CLERMONT FERRAND Cedex 9 (FR); DRUET, Michel, 63040 CLERMONT FERRAND Cedex 9 (FR)
(74) Mandataire: M.F.P. Michelin
(86) Numéro de dépôt international: PCT/FR2018/053245
(87) Numéro de publication internationale: WO 2019/115947

(56) Documents cités:
- WO-A1-2016/105308
- WO-A1-2016/105308
- DE-A1- 19 830 397
- FR-A1- 2 916 152
- FR-A1- 2 916 152

## Description

La présente invention se rapporte au domaine de la cuisson des pneumatiques et a trait plus particulièrement au nettoyage des moules ayant servi à la vulcanisation des pneumatiques.

Les pneumatiques sont habituellement obtenus par moulage et vulcanisation d'une enveloppe crue à l'intérieur d'un moule installé dans une presse de cuisson. Le moule de vulcanisation comprend généralement des secteurs qui forment, après vulcanisation, la surface radialement extérieure ou bande de roulement du pneumatique et des coquilles agencées axialement de part et d'autre des secteurs et forment les flancs du pneumatique. Lors du moulage, les parois externes de l'enveloppe sont plaquées contre les parois internes métalliques du moule de cuisson au moyen d'une membrane de cuisson qui est, elle, expansible sous l'effet d'un fluide caloporteur sous pression. Le dessin de la bande de roulement des garnitures du moule et celui des coquilles s'imprime alors sur l'enveloppe crue qui est ensuite vulcanisée à l'aide de la chaleur.

Les secteurs et les coquilles sont métalliques et sont généralement obtenus par des techniques de moulage et d'usinage mécanique et comportent parfois une couche de revêtement. Les motifs des secteurs sont souvent complexes et les secteurs peuvent comporter des orifices d'éventation. Après avoir effectué un certain nombre de moulages, le moule doit être nettoyé pour enlever les résidus de moulage par exemple, le caoutchouc, l'huile, la graisse qui collent aux parties de moulage et obstruent les orifices d'éventation.

On connaît différentes techniques de nettoyage des moules de vulcanisation, notamment par sablage, mais cela ne permet pas de bien nettoyer tous les recoins des secteurs, de plus, le sable est très abrasif et peut endommager la surface moulante et décolle le revêtement de celle-ci lorsque présent. De surcroît, il faut évacuer le sable utilisé pour le nettoyage.

On connaît également une autre technique de nettoyage des moules à l'aide d'un dispositif à rayon laser, mais qui prend beaucoup de temps et nécessite une aspiration simultanée des fumées et des résidus. Outre son encombrement important (son générateur prend beaucoup de place et ne convient pas au nettoyage d'un moule dans la presse de cuisson), un tel dispositif à rayon laser peut s'avérer dangereux pour l'utilisateur.

Une autre technique de nettoyage qui donne de très bons résultats est le nettoyage à l'aide de la glace carbonique sous pression. On projette ainsi des particules de glace carbonique à grande vitesse contre les parois du moule, la glace se sublime au contact des parois chaudes du moule et décolle instantanément les résidus qui sont entraînés par les gazes qui en résultent ou sont évacués ultérieurement. En fonctionnement, un opérateur muni d'une lance à glace carbonique vient au plus près d'une presse de cuisson et actionne la lance manuellement à l'intérieur du moule. La glace carbonique projetée à l'intérieur du moule arrive à bien le nettoyer, mais dans des conditions de travail assez pénibles pour l'opérateur, notamment en matière de bruit (le bruit généré par l'opération de nettoyage atteint des intensités sonores d'environ 100 à 120 dB), de dangerosité liée à la température du moule, de faible visibilité de l'intérieur du moule à nettoyer et, à terme, de fatigue.

Le document EP 2695728 décrit un dispositif de nettoyage automatique de moules de vulcanisation à l'aide de la glace carbonique. Le dispositif comprend un support annulaire portant deux buses de pulvérisation et qui est relié via un bras de fixation au châssis du dispositif. Le support annulaire renferme des systèmes de guidage linéaire et de déplacement en translation des buses de nettoyage selon deux directions orthogonales, chaque buse étant par ailleurs déplacée en translation par un bras motorisé dans une direction perpendiculaire au plan des deux premières. Le support annulaire est agencé de manière à venir en vis-à-vis d'un moule à nettoyer. Permettant, certes, un nettoyage automatique d'un moule de vulcanisation, ce dispositif présente toutefois l'inconvénient d'être très complexe et encombrant, ce qui pose de problèmes de nettoyage des moules en presse ainsi que des moules de petites dimensions. De surcroît, avant chaque opération de nettoyage, un opérateur doit amener le dispositif en regard du moule à nettoyer et le centrer correctement par rapport à celui-ci, ce qui peut s'avérer fastidieux, surtout dans des conditions de température élevée, en présence de vapeurs ou de fumées, etc.. Un autre procédé de nettoyage des moules est décrit dans le document DE 198 30 397 A1.

Un objectif de l'invention est de remédier aux inconvénients précités et d'apporter une solution originale permettant d'améliorer l'ergonomie, la flexibilité et la qualité du nettoyage d'un ou plusieurs moules de vulcanisation pour pneumatiques, tout en minimisant le temps perdu pendant les opérations annexes au nettoyage.

Cet objectif est atteint par l'invention qui propose un procédé de nettoyage de moule de vulcanisation pour pneumatiques dans une presse de cuisson, à l'aide d'un appareil comportant un robot mobile collaboratif, intégrant un programme d'ordinateur, ledit robot comportant une plateforme mobile autonome montée sur des roues motrices et comportant des batteries d'alimentation en électricité, un distributeur de glace carbonique, des capteurs pour identifier l'emplacement du moule à nettoyer et des moteurs assurant son déplacement entre un emplacement de stockage de l'appareil et le moule à nettoyer ainsi que le déplacement d'un bras mobile articulé dudit robot, ledit bras portant une buse de pulvérisation de glace carbonique en provenance dudit distributeur, dans lequel l'appareil comprend des moyens de communication avec une unité de contrôle pour effectuer les opérations suivantes :
- après avoir reçu une instruction de mission de nettoyage d'un moule de vulcanisation et après avoir vérifié le niveau de chargement en électricité de ses batteries et le niveau de remplissage en glace carbonique d'un réservoir dudit distributeur, quitter son emplacement de stockage ;
- naviguer automatiquement vers l'emplacement du moule à nettoyer ;
- scanner automatiquement l'environnement dans lequel se trouvent la presse de cuisson comportant le moule à nettoyer et éventuellement des obstacles ;
- identifier automatiquement la presse de cuisson comportant le moule à nettoyer et se placer à proximité de celle-ci ;
- nettoyer automatiquement le moule de vulcanisation en dirigeant le bras portant la buse de pulvérisation selon un ensemble d'instructions à l'intérieur du moule de manière à le nettoyer avec de la glace carbonique ;
- communiquer avec l'unité de contrôle pour l'informer de l'avancement de l'opération de nettoyage.

Autrement dit, le procédé de nettoyage cryogénique d'un moule de vulcanisation selon l'invention utilise un appareil de nettoyage autonome qui, lorsqu'il reçoit une instruction de mission de nettoyage en provenance d'une unité de contrôle, navigue vers le moule à nettoyer et réalise un nettoyage automatique de celui-ci, sans intervention d'un opérateur. Le nettoyage s'effectue de manière automatique, en commandant le déplacement de la buse de pulvérisation sur la base du fichier 3D du moule à nettoyer ou des dimensions (hauteur, diamètre) du moule ou sur la base des images du moules transmises par une caméra. Les instructions de nettoyage sont préprogrammées ou envoyées par l'unité de contrôle. Le déplacement de la buse de pulvérisation est ainsi adapté au moule à nettoyer, ce qui permet des trajectoires précises de la buse de pulvérisation. L'appareil réalise un nettoyage à l'aide de la glace carbonique pulvérisée à haute vitesse à l'intérieur d'un moule chaud situé dans la presse de cuisson, ce qui permet d'obtenir un nettoyage rapide et complet, de grande qualité, car il permet de décrocher même les résidus placés dans des endroits difficilement accessibles ou faiblement éclairées, voire sujets à des émissions de vapeur, et cela sans poser de problèmes d'ergonomie pour un utilisateur. Il permet d'obtenir un gain de productivité, car l'appareil, dès qu'il est approvisionné en glace carbonique et en électricité, peut enchaîner les nettoyages sans attendre.

De préférence, ledit appareil communique avec au moins un opérateur.

Dans une variante préférée de réalisation de l'invention, la communication entre l'appareil de nettoyage et l'opérateur est bilatérale. Ainsi, l'appareil ne peut commencer le nettoyage qu'après avoir reçu une instruction de mission de nettoyage transmise par l'opérateur qui accède l'unité de contrôle. L'opérateur est bien entendu muni de moyens de communication avec l'appareil (montre connectée, tablette, etc.) et peut se déplacer en toute sécurité dans l'atelier après avoir communiqué avec l'appareil. Dans une autre variante de réalisation de l'invention, la communication est unilatérale, de l'appareil vers l'opérateur, ce qui permet à l'utilisateur d'être informé de l'état de l'appareil ou de l'avancement de la mission de nettoyage de l'appareil. Cela permet à l'opérateur de s'éloigner de l'emplacement qui est en train d'être nettoyé, ce qui lui évite toute gêne liée au bruit intense durant le nettoyage.

Avantageusement ledit appareil communique avec un automate de pilotage d'un atelier de cuisson dans lequel se trouve la presse de cuisson comportant le moule à nettoyer.

L'automate de pilotage de l'atelier de cuisson est un système de management de la cuisson, il gère les entrées et sorties d'ébauches crues de pneumatiques et des pneumatiques cuits de l'atelier et gère le fonctionnement de toutes les presses de cuisson. Cet automate de pilotage comptabilise également le nombre de cuissons effectué par un moule et décide à quel moment il doit être nettoyé. En le faisant communiquer directement avec l'appareil de nettoyage, on assure un nettoyage au moment opportun du moule, sans temps d'attente, car cela peut se faire même en dehors des horaires de travail des opérateurs. On peut également faire communiquer l'opérateur qui a contrôlé le pneumatique cuit avec l'automate de pilotage de l'atelier de cuisson qui envoie à l'appareil de nettoyage une instruction de mission de nettoyage du moule qui a réalisé la cuisson du pneu contrôlé et sur lequel l'opérateur a détecté un défaut.

De préférence, le procédé comprend une étape lors de laquelle l'appareil de nettoyage contourne les obstacles identifiés lors de sa navigation. Cela permet un gain de temps considérable par rapport à des véhicules autonomes guidés (AGV) qui s'arrêtent devant l'obstacle.

Avantageusement, après avoir reçu l'information que le nettoyage du moule de vulcanisation est terminé, l'unité de contrôle envoie une nouvelle instruction de mission de nettoyage de moule de vulcanisation audit appareil. Cela permet d'enchaîner les opérations de nettoyage, pour plus d'efficacité.

De préférence, après avoir identifié la presse de cuisson comportant le moule à nettoyer, l'appareil vient se connecter à une prise de chargement en électricité et à une prise d'air comprimé contiguës au socle de la presse de cuisson. Cela permet d'économiser l'énergie stockée dans ses batteries et confère plus d'autonomie à l'appareil de nettoyage.

Avantageusement, le procédé comprend une étape lors de laquelle ledit appareil retourne dans son emplacement de stockage dès que le niveau de remplissage en glace carbonique du réservoir est descendu en dessous d'une limite prédéterminée. Cela permet de garantir la qualité du nettoyage, le processus de nettoyage pouvant être repris dès que la quantité de glace est suffisante.

De préférence, ledit appareil recharge automatiquement son réservoir en glace carbonique. Ainsi, l'appareil peut se diriger vers le réservoir de stockage de glace carbonique et se charger automatiquement, ce qui permet de gagner du temps.

Avantageusement, le procédé comprend une étape de soufflage ou d'aspiration des résidus de nettoyage. Ceci permet d'évacuer rapidement tous les résidus de nettoyage et obtenir un moule de vulcanisation propre et opérationnel.

L'invention a également pour objet un appareil de nettoyage apte à nettoyer un moule de vulcanisation de pneumatiques dans une presse de cuisson comportant :
- un robot mobile collaboratif intégrant un programme d'ordinateur, ledit robot comportant une plateforme mobile autonome montée sur des roues motrices et comportant des batteries d'alimentation en électricité ;
- un distributeur de glace carbonique relié à une buse de pulvérisation portée par un bras mobile articulé dudit robot ;
- des moteurs assurant son déplacement entre un emplacement de stockage de l'appareil et le moule de vulcanisation à nettoyer ainsi que le déplacement dudit bras articulé ;
- des moyens de communication avec une unité de contrôle qui lui transmet une instruction de mission de nettoyage du moule de vulcanisation ;
- des capteurs pour identifier l'emplacement du moule à nettoyer et un système de contrôle utilisant un système de navigation ;
- ledit système de contrôle étant relié auxdits capteurs pour ajuster la position de l'appareil et détecter l'emplacement du moule à nettoyer et éventuellement les objets sur sa trajectoire lorsqu'il se déplace entre un emplacement de stockage de l'appareil et l'emplacement du moule à nettoyer ;
- une mémoire de stockage de données numériques ;
- un module de commande qui permet l'actionnement de ses composants en fonction de l'instruction reçue de l'unité de contrôle.

Avantageusement, ledit module de commande comprend un processeur qui, lorsqu'il reçoit une instruction de mission de nettoyage en provenance de ladite unité de contrôle, est programmé pour :
- vérifier le niveau de chargement en électricité de ses batteries et le niveau de remplissage en glace carbonique de son réservoir,
- permettre à l'appareil de quitter son emplacement de stockage ; et de
- naviguer automatiquement vers l'emplacement du moule à nettoyer ; et de
- scanner automatiquement l'environnement dans lequel se trouve la presse de cuisson comportant le moule à nettoyer et éventuellement des obstacles ; ainsi que
- d'identifier automatiquement la presse de cuisson comportant le moule à nettoyer et se placer à proximité de celle-ci ; et de
- nettoyer automatiquement le moule de vulcanisation en dirigeant le bras portant la buse de pulvérisation selon un ensemble d'instructions à l'intérieur du moule de manière à le nettoyer avec de la glace carbonique ; et de
- communiquer avec l'unité de contrôle pour l'informer de l'avancement de l'opération de nettoyage.

De préférence, l'appareil comprend des moyens de communication avec au moins un opérateur.

Avantageusement, l'appareil comprend des moyens de communication avec un automate de pilotage d'un atelier de cuisson dans lequel se trouve la presse de cuisson comportant le moule à nettoyer.

De préférence, l'appareil comprend des moyens de navigation lui permettant d'éviter les obstacles.

Avantageusement, l'appareil comprend des moyens d'identification de son emplacement auprès de la presse de cuisson comportant le moule à nettoyer et des moyens de connexion à une prise de chargement en électricité et à une prise d'air comprimé contiguës au socle de la presse.

De préférence, l'appareil comporte des capteurs de mesure du niveau de remplissage en glace carbonique du réservoir qui sont reliés audit système de contrôle qui envoie une instruction au module de commande pour le retour de l'appareil dans son emplacement de stockage dès que le niveau de remplissage en glace carbonique du réservoir est descendu en dessous d'une limite prédéterminée.

Avantageusement, l'appareil comprend des moyens de soufflage ou d'aspiration des résidus de nettoyage.

L'invention sera mieux comprise grâce à la suite de la description, qui s'appuie sur les figures suivantes :
- la figure 1 est une vue en perspective d'un appareil de nettoyage de l'invention ;
- la figure 2 est une vue latérale de l'appareil de la figure 1 ;
- la figure 3 illustre de manière schématique le panneau de connexion de l'appareil de nettoyage lors de l'opération de nettoyage ;
- la figure 4 est un schéma bloc fonctionnel de l'appareil de nettoyage ;
- la figure 5 est un diagramme de fonctionnement de l'appareil de nettoyage selon un premier mode de réalisation de l'invention;
- la figure 6 est un diagramme de fonctionnement de l'appareil de nettoyage selon un deuxième mode de réalisation de l'invention.

Sur les différentes figures, les éléments identiques ou similaires portent la même référence. Leur description n'est donc pas systématiquement reprise.

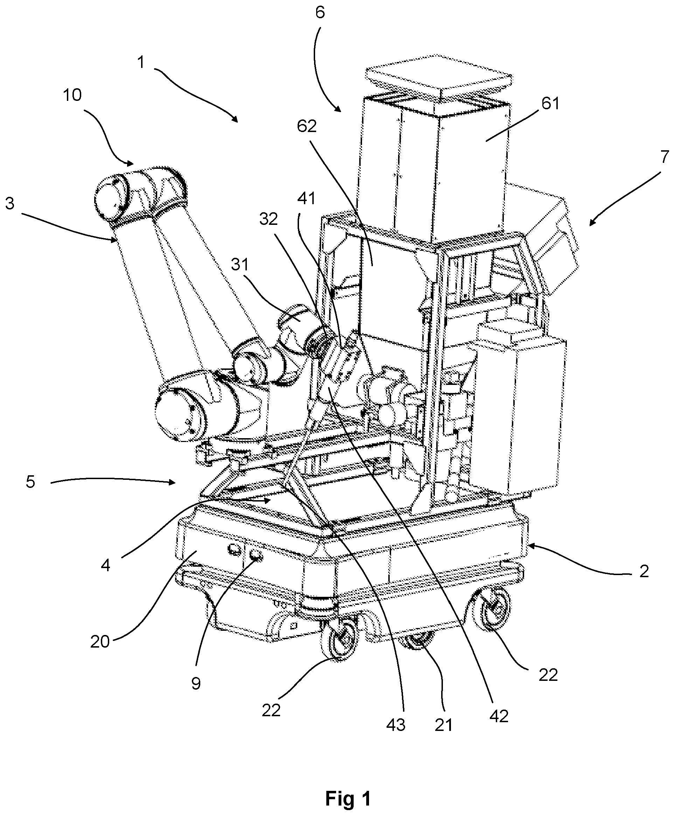

La figure 1 illustre un appareil 1 de nettoyage apte à nettoyer des moules de vulcanisation pour pneumatiques selon l'invention. L'appareil 1 comprend un robot mobile collaboratif 10 comprenant une plateforme mobile autonome 2 sur laquelle est monté un bras articulé 3 qui porte une buse de pulvérisation 4 reliée à un distributeur de glace carbonique et qui se déplace avec la plateforme. La plateforme mobile autonome 2 comprend un châssis 20 de forme générale rectangulaire. Le châssis est supporté par deux paires de roues 22 avant et arrière, montées libres en rotation, et il est déplacé par deux roues différentielles 21, chacune étant entraînée en rotation par un moteur électrique. La plateforme mobile autonome 20 intègre également des batteries d'alimentation électrique (non représentées sur les dessins). La plateforme mobile autonome 2 comprend par ailleurs des capteurs pour scanner et identifier l'environnement, un dispositif de contrôle à microprocesseur et des moyens de communication sans fil, par exemple par wifi avec une unité de contrôle distante. Une telle plateforme mobile autonome est par exemple du type MiR 200^{™} proposée par Mobile Industrial Robots ApS. Elle peut porter jusqu'à 200kg de charge, elle comprend plusieurs capteurs (à ultrasons et laser) et une caméra 3D intégrés reliés à l'unité de contrôle à microprocesseur de la plateforme. La plateforme mobile autonome 20 est ainsi amenée à scanner son environnement, elle identifie les obstacles ou les personnes, qu'elle arrive à éviter, tout en calculant le trajet le plus efficace pour se déplacer jusqu'à sa destination. Le dispositif de contrôle de la plateforme est relié au système de contrôle embarqué de l'appareil de nettoyage, par exemple par un lien de type Ethernet.

Le bras articulé 3 est un bras de robot collaboratif qui est monté sur la plateforme mobile autonome 2 dont il reçoit l'alimentation et la commande en fonctionnement. Il va de soi que la plateforme intègre des capteurs de proximité qui détectent l'approche d'un opérateur ou d'un objet. Le robot est du type collaboratif et comporte des capteurs de force qui agissent sur le robot collaboratif en conséquence de manière généralement connue, notamment du document US 9,669,548. Les capteurs de force du robot collaboratif agissent lorsque la plateforme autonome est arrêtée. Le bras articulé 3 est du type robot collaboratif à six axes de rotation et comprend plusieurs tronçons de bras articulés les uns par rapport aux autres. Le dernier tronçon 31 du bras articulé 3 comprend un effecteur 32 qui maintient le corps 41 d'une buse de pulvérisation 4 de manière à ce que la buse se déplace avec le bras.

Le corps 41 de la buse de pulvérisation 4 est prolongé par une lance 43. La lance 43 est recouverte d'un manchon 42 en un matériau qui a de bonnes propriétés d'isolation thermique, tel que de la laine isolante, du polystyrène expansé, etc. La buse de pulvérisation est raccordée à l'aide d'un tuyau flexible (non illustré sur les dessins) à un distributeur de glace carbonique, tel qu'il sera expliqué dans ce qui suit.

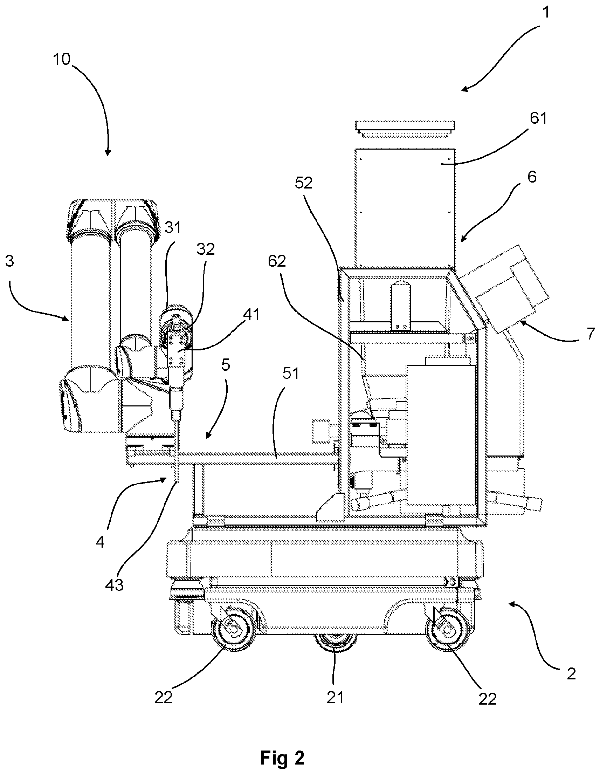

Tel que mieux visible aux figures 1 et 2, un cadre 5 est monté fixe sur la face supérieure de la plateforme mobile autonome 2. Le cadre 5 est métallique et forme une structure porteuse pour certains composants de l'appareil de nettoyage de moule de vulcanisation. Le cadre 5 comprend une première partie 51 de support du bras articulé 3 et une deuxième partie 52 formant support pour d'autres composants de l'appareil. Le bras articulé 3 est monté à l'extrémité avant de la partie 51 du cadre 5 en étant surélevé et déporté par rapport à l'extrémité avant de la plateforme mobile 2 de manière à pouvoir accéder plus facilement à l'intérieur du moule à nettoyer.

La deuxième partie 52 du cadre 5 supporte un distributeur de glace carbonique 6 et un système de contrôle 7 embarqué. Le distributeur de glace carbonique 6 comprend un réservoir 61 qui contient des pellets de glace carbonique sèche à une température d'environ -78°C. Les pellets de glace carbonique ont une forme cylindrique de diamètre d'environ 2 à 3 mm pour une hauteur de quelques mm. Dans une variante, on peut utiliser des microcristaux de glace carbonique. Les pellets ou microcristaux de glace carbonique passent du réservoir 61 dans une enceinte 62 de distribution à partir de laquelle elles sont projetées à environ 300m/s sur la surface à nettoyer à l'aide de l'air comprimé. L'air comprimé à une pression comprise entre 1 et 15 bars arrive dans l'enceinte 62 en provenance du réseau d'air comprimé de l'atelier de cuisson ou d'un compresseur porté par la plateforme mobile autonome 2. Dans une variante, l'enceinte 62 est reliée à un ventilateur porté par la plateforme autonome. L'entrée dans l'enceinte 62 est munie d'une électrovanne (non illustrée sur les dessins) qui est pilotée par le système de contrôle 7 de l'appareil. Le réservoir 61, l'enceinte 62 et les tuyaux de transfert de glace carbonique vers la buse de pulvérisation 4 sont recouverts de matériaux isolants thermiques.

Le système de contrôle 7 de l'appareil de nettoyage est relié au dispositif de contrôle de la plateforme autonome 2 qui utilise un système de navigation embarqué. L'appareil comprend dans sa mémoire une carte de l'atelier (qui peut être tracée par l'appareil ou téléchargée à partir d'un support numérique) et est apte à s'orienter et à naviguer (il calcule sa trajectoire en fonction du point de départ, du point d'arrivée et des obstacles rencontrés) en utilisant des algorithmes de type SLAM (Simultaneous Localisation And Mapping).

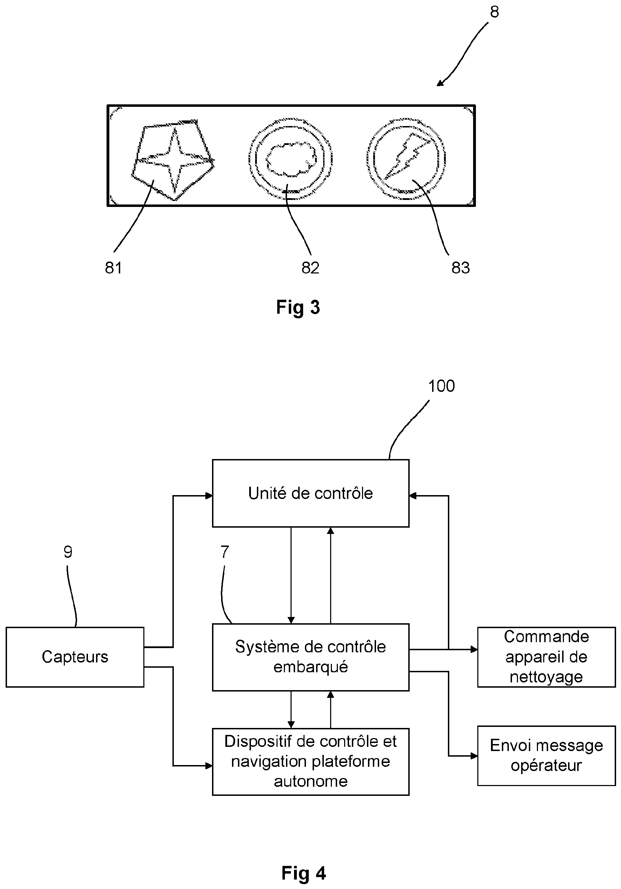

Tel qu'illustré à la figure 4, le système de contrôle 7 est relié au dispositif de contrôle et de navigation de la plateforme autonome 2 qui reçoit l'information en provenance des capteurs de l'appareil pour identifier l'emplacement du moule à nettoyer. Le dispositif de contrôle et de navigation est relié auxdits capteurs pour ajuster la position de l'appareil et détecter l'emplacement du moule à nettoyer et éventuellement les objets à éviter sur sa trajectoire lorsqu'il se déplace entre un emplacement de stockage de l'appareil et l'emplacement du moule à nettoyer. L'appareil comprend également des moyens de communication sans fil, par exemple par wifi, avec une unité de contrôle 100 distante qui a le rôle de superviseur pour le fonctionnement de l'appareil, unité qui lui transmet une instruction de mission de nettoyage du moule de vulcanisation. Le système de contrôle 7 embarqué est du type ordinateur à microprocesseur, comprenant donc une ou plusieurs unités de processeur CPU et des mémoires RAM et ROM. L'appareil comprend aussi un module de commande qui permet l'actionnement de ses composants en fonction de l'instruction reçue de l'unité de contrôle 100 via le système de contrôle 7.

L'appareil de nettoyage comprend également un module de communication de type GSM avec au moins un opérateur. Chaque opérateur est muni d'un dispositif récepteur de type montre connectée, tablette ou smartphone. Ainsi, l'opérateur qui se trouve dans l'atelier de cuisson reçoit ainsi un message de la part de l'appareil qui est en train d'effectuer sa mission de nettoyage de moule de vulcanisation et est averti de l'opération en cours afin qu'il puisse prendre des mesures en conséquence (s'écarter pour éviter le bruit, quitter l'atelier, etc.).

Lorsqu'il n'est pas en mission de nettoyage d'un moule de vulcanisation, l'appareil de nettoyage se place dans un emplacement de stockage dans lequel il est branché sur une borne de recharge en électricité (non illustrée dans les dessins). L'emplacement de stockage est muni de moyens d'approvisionnement en glace carbonique en provenance d'un réservoir de stockage ou d'une machine de fabrication de glace carbonique.

Lorsqu'il est en mission de nettoyage, l'appareil 1 navigue vers l'emplacement de la presse de cuisson comportant le moule de vulcanisation à nettoyer et il se range à côté de celui-ci. Le socle de la presse de cuisson est doté d'une borne d'alimentation 8 en électricité et en air comprimé. La borne d'alimentation 8 est mieux visible à la figure 3. Elle comprend un repère 81 qui est un repère à reconnaissance de forme, la forme du repère ayant été au préalable enregistrée dans la mémoire de l'appareil de nettoyage. La borne 8 comprend également une prise d'alimentation en air comprimé 82 et une prise d'alimentation en électricité 83. Le raccordement en air comprimé se fait via un couplage pneumatique rapide à raccordement instantané du type commercialisé par la société PARKER HANNIFIN. Le raccordement en électricité se fait à l'aide d'un couplage rapide du type couplage magnétique SELFPLUG^{®} de la société GULPLUG. En fonctionnement, l'appareil 1 vient se placer devant le repère 81, ce qui assure le positionnement précis de la prise correspondante de couplage de son tuyau de branchement en air comprimé devant la prise d'air comprimé 82 et de son connecteur électrique respectif devant la prise d'alimentation en électricité 83.

Dans une variante, l'appareil de nettoyage comporte un compresseur embarqué et transporte suffisamment d'énergie électrique dans ses batteries pour ne pas avoir besoin de se connecter à la borne 8.

En fonctionnement, l'appareil de nettoyage dirige la buse de pulvérisation 4 vers l'intérieur du moule à nettoyer conformément aux instructions reçues de son système de contrôle 7. La glace carbonique pulvérisée sous pression contre les parties chaudes du moule de vulcanisation à nettoyer provoque d'une part un choc mécanique, de par l'impact à haute vitesse des particules de glace contre les parois du moule, et, d'autre part, un choc thermique, de par la différence de températures (environ 170°C pour le moule chaud et aux environs de -78°C pour la glace carbonique). Suite aux effets cumulés du choc mécanique et du choc thermique, les résidus de moulage se détachent de la paroi du moule. De surcroît, la glace carbonique passe directement de l'état solide à l'état gazeux, son volume se trouve nettement augmenté (d'environ 800 fois), ce qui entraîne une partie des résidus de nettoyage. A la fin du nettoyage, l'électrovanne qui permet l'accès de la glace carbonique dans l'enceinte 62 est fermée et la buse 4 envoie de l'air comprimé vers le moule, ce qui permet d'évacuer les résidus de nettoyage. Dans une variante, on bloque l'arrivée d'air comprimé dans l'enceinte 62 qu'on met ensuite en communication avec un ventilateur qui permet une aspiration via la buse 4 (l'accès de la glace carbonique dans l'enceinte étant toujours empêché par l'électrovanne). L'action d'aspiration du ventilateur de l'appareil permet aux résidus de nettoyage d'être aspirés via la buse 4 dans l'enceinte 62 qui communique dans ce but avec un réservoir de stockage annexe via une soupape anti-retour (non illustrés sur les dessins).

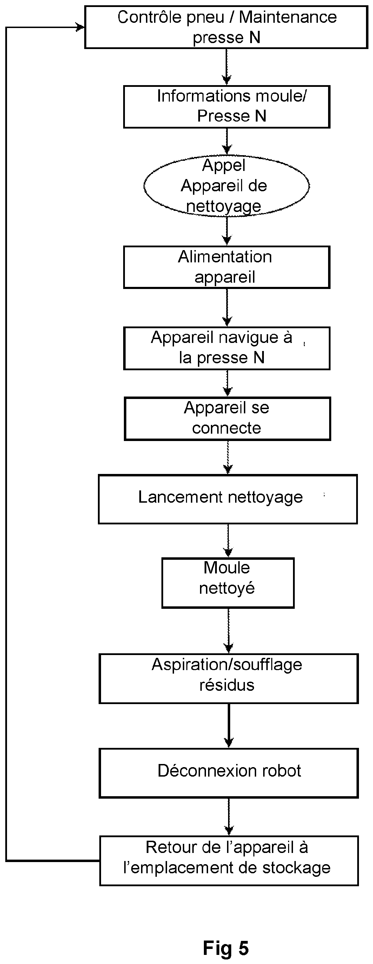

La figure 5 est un diagramme bloc qui illustre les principales étapes de l'opération de nettoyage de moule de vulcanisation selon un premier mode de réalisation. L'appareil de nettoyage communique ainsi avec l'unité de contrôle de l'atelier et effectue l'opération en automatique selon les étapes indiquées sur la figure 5. Il s'agit d'une opération de nettoyage complètement automatique.

Plus particulièrement et tel que visible sur cette figure, le nettoyage du moule de vulcanisation est décidé après vérification du pneumatique cuit ou en vue d'une maintenance préventive demandée par l'automate de pilotage de l'atelier de cuisson. L'information est transmise à l'unité de contrôle ou de supervision, en l'occurrence l'automate de pilotage de l'atelier de cuisson, qui appelle l'appareil de nettoyage pour effectuer une mission de nettoyage de moule de vulcanisation. L'appareil vérifie le niveau de remplissage en glace carbonique de son réservoir et le niveau de chargement de ses batteries et, le cas échéant, il se recharge, ensuite il quitte l'emplacement de stockage. L'appareil se déplace en autonomie jusqu'à la presse « N » à nettoyer pour laquelle il a reçu l'instruction de mission de nettoyage. L'appareil connaît l'emplacement de la presse et calcule son trajet optimum pour s'y rendre en mode de navigation autonome. Une fois arrivé devant la presse, l'appareil se connecte en air comprimé et en électricité auprès de la borne d'alimentation prévue à cet effet au pied de la presse. Une fois connecté, l'appareil lance l'opération de nettoyage selon un programme préétabli et en fonction des données reçues de l'unité centrale. Le moule est ainsi nettoyé, les résidus étant enlevées lors d'une opération de soufflage ou d'aspiration effectuée par l'appareil de nettoyage. Le robot mobile collaboratif est ensuite déconnecté automatiquement par l'appareil. L'appareil de nettoyage revient à son emplacement de stockage en mode navigation autonome et il attend une nouvelle instruction.

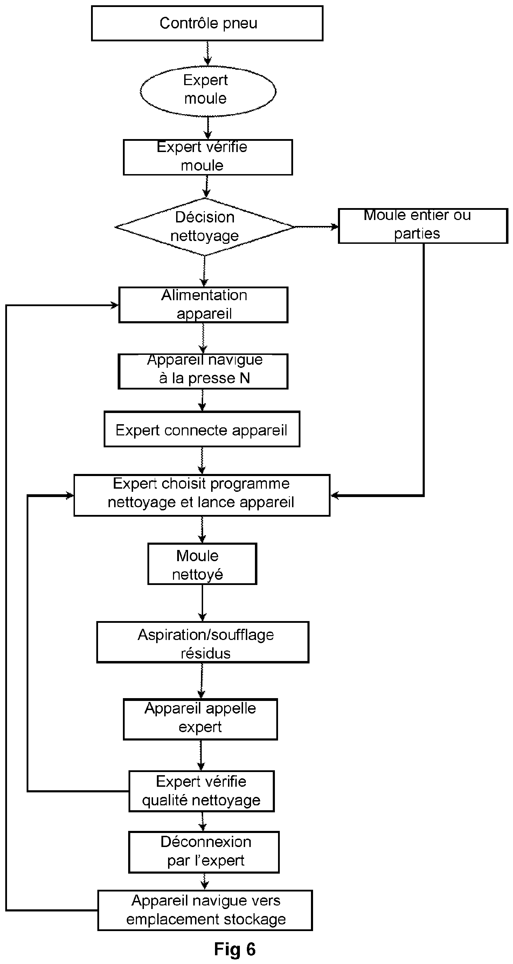

La figure 6 est un diagramme bloc qui représente les étapes de l'opération de nettoyage de moule de vulcanisation selon un deuxième mode de réalisation. Le point de départ est l'étape d'inspection du pneumatique cuit, mais l'ordre est donné cette fois par un opérateur, qui est l'expert des moules de vulcanisation, et qui transmet ses instructions via une interface de l'unité de contrôle de l'appareil. L'appareil de nettoyage se déplace de manière autonome et effectue le nettoyage en automatique, mais il communique avec l'opérateur qui intervient à certaines étapes avant de transmettre une instruction à l'appareil. Il s'agit d'une opération de nettoyage semi-automatique.

Plus particulièrement, et tel que visible sur cette figure, une fois le contrôle du pneumatique cuit effectué, on appelle l'expert des moules de vulcanisation qui vérifie le moule qui a effectué la cuisson du pneumatique contrôlé et décide d'une opération de nettoyage du moule, soit en entier, soit seulement sur une partie ou zone qui a produit des défauts sur le pneu. L'expert envoie ensuite une instruction de mission de nettoyage à l'appareil. Comme dans le mode précédemment décrit, l'appareil vérifie le niveau de remplissage en glace carbonique de son réservoir et le niveau de chargement de ses batteries et, le cas échéant, il se recharge, ensuite il quitte l'emplacement de stockage. L'appareil se déplace en autonomie jusqu'à la presse à nettoyer « N » pour laquelle il a reçu l'instruction de mission de nettoyage. L'appareil connaît l'emplacement de la presse et calcule son trajet optimum pour s'y rendre en mode de navigation autonome. Une fois arrivé devant la presse, l'appareil s'arrête et l'opérateur le connecte en air comprimé et en électricité auprès de la borne d'alimentation prévue à cet effet au pied de la presse. Après connexion, l'expert envoie à l'appareil une instruction pour effectuer un programme de nettoyage qu'il a choisi après avoir effectué l'inspection du moule. L'appareil effectue l'opération de nettoyage. Une fois le moule ainsi nettoyé, les résidus sont enlevées par une opération de soufflage ou d'aspiration effectuée par l'appareil de nettoyage. L'appareil communique avec l'expert pour l'informer de la fin du nettoyage. L'expert vérifie la qualité du nettoyage effectué et déconnecte le robot mobile collaboratif. L'appareil revient ensuite à son emplacement de stockage en mode navigation autonome et il attend une nouvelle instruction.

D'autres variantes et modes de réalisation de l'invention peuvent être envisagés sans sortir du cadre de ses revendications.

Ainsi, à la place d'une plateforme autonome guidée à l'aide de ses capteurs et d'une carte à base d'algorithmes de type SLAM, on peut utiliser un véhicule guidé autonome, connu sous l'abréviation AGV, qui navigue en suivant par exemple un rail magnétique, ou en s'aidant d'un radar. Mis à part le système de navigation qui est différent, un tel appareil de nettoyage comprenant un véhicule guidé autonome comprend les mêmes composants que celui précédemment décrit.

On peut également prévoir que l'appareil de nettoyage retourne vers son emplacement de stockage dès que le système de contrôle détecte un disfonctionnement d'un de ses composants.

## Revendications

1. Procédé de nettoyage de moule de vulcanisation pour pneumatiques dans une presse de cuisson, à l'aide d'un appareil comportant un robot mobile collaboratif (10), intégrant un programme d'ordinateur, ledit robot comportant une plateforme mobile autonome (2) montée sur des roues motrices et comportant des batteries d'alimentation en électricité, un distributeur de glace carbonique (6), des capteurs pour identifier l'emplacement du moule à nettoyer et des moteurs assurant son déplacement entre un emplacement de stockage de l'appareil et le moule à nettoyer ainsi que le déplacement d'un bras mobile articulé (3) dudit robot, ledit bras portant une buse de pulvérisation (4) de glace carbonique en provenance dudit distributeur, dans lequel l'appareil comprend des moyens de communication avec une unité de contrôle pour effectuer les opérations suivantes :
- après avoir reçu une instruction de mission de nettoyage d'un moule de vulcanisation et après avoir vérifié le niveau de chargement en électricité de ses batteries et le niveau de remplissage en glace carbonique d'un réservoir (61) dudit distributeur, quitter son emplacement de stockage ;
- naviguer automatiquement vers l'emplacement du moule à nettoyer ;
- scanner automatiquement l'environnement dans lequel se trouvent la presse de cuisson comportant le moule à nettoyer et éventuellement des obstacles ;
- identifier automatiquement la presse de cuisson comportant le moule à nettoyer et se placer à proximité de celle-ci ;
- nettoyer automatiquement le moule de vulcanisation en dirigeant le bras portant la buse de pulvérisation (4) selon un ensemble d'instructions à l'intérieur du moule de manière à le nettoyer avec de la glace carbonique ;
- communiquer avec l'unité de contrôle pour l'informer de l'avancement de l'opération de nettoyage.

2. Procédé selon la revendication précédente, **caractérisé en ce que** ledit appareil communique avec au moins un opérateur.

3. Procédé selon l'une des revendications 1 ou 2, **caractérisé en ce que** ledit appareil communique avec un automate de pilotage d'un atelier de cuisson dans lequel se trouve la presse de cuisson comportant le moule à nettoyer.

4. Procédé selon l'une des revendications précédentes, **caractérisé en ce que**, après avoir reçu l'information que le nettoyage du moule de vulcanisation est terminé, l'unité de contrôle envoie une nouvelle instruction de mission de nettoyage de moule de vulcanisation audit appareil.

5. Procédé selon l'une des revendications précédentes, **caractérisé en ce que**, après avoir identifié la presse de cuisson comportant le moule à nettoyer, l'appareil vient se connecter à une prise de chargement en électricité et à une prise d'air comprimé contiguës au socle de la presse de cuisson.

6. Procédé selon l'une des revendications précédentes, **caractérisé en ce qu'**il comprend une étape lors de laquelle ledit appareil retourne dans son emplacement de stockage dès que le niveau de remplissage en glace carbonique du réservoir est descendu en dessous d'une limite prédéterminée.

7. Procédé selon la revendication 6, **caractérisé en ce que** ledit appareil recharge automatiquement son réservoir en glace carbonique.

8. Procédé selon l'une des revendications précédentes, **caractérisé en ce qu'**il comprend une étape de soufflage ou d'aspiration des résidus de nettoyage.

9. Appareil de nettoyage apte à nettoyer un moule de vulcanisation de pneumatiques dans une presse de cuisson comportant :
- un robot mobile collaboratif (10) intégrant un programme d'ordinateur, ledit robot comportant une plateforme mobile autonome (2) montée sur des roues motrices et comportant des batteries d'alimentation en électricité ;
- un distributeur de glace carbonique (6) relié à une buse de pulvérisation (4) portée par un bras mobile articulé (3) dudit robot ;
- des moteurs assurant son déplacement entre un emplacement de stockage de l'appareil et le moule de vulcanisation à nettoyer ainsi que le déplacement dudit bras articulé ;
- des moyens de communication avec une unité de contrôle qui lui transmet une instruction de mission de nettoyage du moule de vulcanisation ;
- des capteurs pour identifier l'emplacement du moule à nettoyer et un système de contrôle utilisant un système de navigation ;
- ledit système de contrôle étant relié auxdits capteurs pour ajuster la position de l'appareil et détecter l'emplacement du moule à nettoyer et éventuellement les objets sur sa trajectoire lorsqu'il se déplace entre un emplacement de stockage de l'appareil et l'emplacement du moule à nettoyer ;
- une mémoire de stockage de données numériques ;
- un module de commande qui permet l'actionnement de ses composants en fonction de l'instruction reçue de l'unité de contrôle.

10. Appareil selon la revendication 9, **caractérisé en ce que** ledit module de commande comprend un processeur qui, lorsqu'il reçoit une instruction de mission de nettoyage en provenance de ladite unité de contrôle, est programmé pour :
- vérifier le niveau de chargement en électricité de ses batteries et le niveau de remplissage en glace carbonique de son réservoir,
- permettre à l'appareil de quitter son emplacement de stockage ; et de
- naviguer automatiquement vers l'emplacement du moule à nettoyer ; et de
- scanner automatiquement l'environnement dans lequel se trouve la presse de cuisson comportant le moule à nettoyer et éventuellement des obstacles ; ainsi que
- d'identifier automatiquement la presse de cuisson comportant le moule à nettoyer et se placer à proximité de celle-ci ; et de
- nettoyer automatiquement le moule de vulcanisation en dirigeant le bras portant la buse de pulvérisation selon un ensemble d'instructions à l'intérieur du moule de manière à le nettoyer avec de la glace carbonique ; et de
- communiquer avec l'unité de contrôle pour l'informer de l'avancement de l'opération de nettoyage.

11. Appareil selon l'une des revendications 9 ou 10, **caractérisé en ce qu'**il comprend des moyens de communication avec au moins un opérateur.

12. Appareil selon l'une des revendications 9 à 11, **caractérisé en ce qu'**il comprend des moyens de communication avec un automate de pilotage d'un atelier de cuisson dans lequel se trouve la presse de cuisson comportant le moule à nettoyer.

13. Appareil selon l'une des revendications 9 à 12, **caractérisé en ce qu'**il comprend des moyens d'identification de son emplacement auprès de la presse de cuisson comportant le moule à nettoyer et des moyens de connexion à une prise de chargement en électricité et à une prise d'air comprimé contiguës au socle de la presse.

14. Appareil selon l'une des revendications 9 à 13, **caractérisé en ce qu'**il comporte des capteurs de mesure du niveau de remplissage en glace carbonique du réservoir qui sont reliés audit système de contrôle qui envoie une instruction au module de commande pour le retour de l'appareil dans son emplacement de stockage dès que le niveau de remplissage en glace carbonique du réservoir est descendu en dessous d'une limite prédéterminée.

15. Appareil selon l'une des revendications 9 à 14, **caractérisé en ce qu'**il comprend des moyens de soufflage ou d'aspiration des résidus de nettoyage.

## Patentansprüche

1. Verfahren zum Reinigen einer Vulkanisationsform für Reifen in einer Vulkanisierpresse mithilfe eines Geräts, das einen kollaborativen mobilen Roboter (10) aufweist, der ein Computerprogramm beinhaltet, wobei der Roboter eine autonome mobile Plattform (2), die auf Antriebsrädern montiert ist und Stromversorgungsbatterien aufweist, eine Trockeneisausgabeeinrichtung (6), Sensoren zur Identifizierung des Platzes der zu reinigenden Form und Motoren, die sein Bewegen zwischen einem Lagerplatz des Geräts und der zu reinigenden Form sowie das Bewegen eines beweglichen Gelenkarms (3) des Roboters gewährleisten, aufweist, wobei der Arm eine Sprühdüse (4) für Trockeneis aus der Ausgabeeinrichtung trägt, wobei das Gerät Mittel zur Kommunikation mit einer Steuereinheit umfasst, um die folgenden Vorgänge durchzuführen:
- nachdem es eine Reinigungsauftragsanweisung für eine Vulkanisationsform erhalten hat und nachdem es den Stromladestand seiner Batterien und den Trockeneisfüllstand eines Tanks (61) der Ausgabeeinrichtung überprüft hat, seinen Lagerplatz zu verlassen;
- automatisch zu dem Platz der zu reinigenden Form zu navigieren;
- die Umgebung, in der sich die Vulkanisierpresse mit der zu reinigenden Form befindet, und gegebenenfalls Hindernisse automatisch zu scannen;
- die Vulkanisierpresse mit der zu reinigenden Form automatisch zu identifizieren und sich in deren Nähe zu positionieren;
- die Vulkanisationsform automatisch zu reinigen, indem der die Sprühdüse (4) tragende Arm gemäß einer Menge von Anweisungen in das Innere der Form geführt wird, so dass sie mit Trockeneis gereinigt wird;
- mit der Steuereinheit zu kommunizieren, um sie über den Fortschritt des Reinigungsvorgangs zu informieren.

2. Verfahren nach dem vorhergehenden Anspruch, **dadurch gekennzeichnet, dass** das Gerät mit mindestens einer Bedienperson kommuniziert.

3. Verfahren nach einem der Ansprüche 1 oder 2, **dadurch gekennzeichnet, dass** das Gerät mit einem Steuerungsautomaten einer Vulkanisierwerkstatt kommuniziert, in der sich die Vulkanisierpresse mit der zu reinigenden Form befindet.

4. Verfahren nach einem der vorhergehenden Ansprüche, **dadurch gekennzeichnet, dass** die Steuereinheit, nachdem sie die Information erhalten hat, dass die Reinigung der Vulkanisationsform beendet ist, eine neue Reinigungsauftragsanweisung für eine Vulkanisationsform an das Gerät sendet.

5. Verfahren nach einem der vorhergehenden Ansprüche, **dadurch gekennzeichnet, dass** sich das Gerät, nachdem es die Vulkanisierpresse mit der zu reinigenden Form identifiziert hat, an eine Stromladesteckdose und an eine Druckluftsteckdose anschließt, die an den Sockel der Vulkanisierpresse angrenzen.

6. Verfahren nach einem der vorhergehenden Ansprüche, **dadurch gekennzeichnet, dass** es einen Schritt umfasst, bei dem das Gerät an seinen Lagerplatz zurückkehrt, sobald der Trockeneisfüllstand des Tanks unter einen vorbestimmten Grenzwert gesunken ist.

7. Verfahren nach Anspruch 6, **dadurch gekennzeichnet, dass** das Gerät seinen Tank automatisch wieder mit Trockeneis auffüllt.

8. Verfahren nach einem der vorhergehenden Ansprüche, **dadurch gekennzeichnet, dass** es einen Schritt des Abblasens oder Absaugens der Reinigungsrückstände umfasst.

9. Reinigungsgerät, das geeignet ist, eine Vulkanisationsform für Reifen in einer Vulkanisierpresse zu reinigen, aufweisend:
- einen kollaborativen mobilen Roboter (10), der ein Computerprogramm beinhaltet, wobei der Roboter eine autonome mobile Plattform (2) aufweist, die auf Antriebsrädern montiert ist und Stromversorgungsbatterien aufweist;
- eine Trockeneisausgabeeinrichtung (6), die mit einer Sprühdüse (4) verbunden ist, die von einem beweglichen Gelenkarm (3) des Roboters getragen wird;
- Motoren, die sein Bewegen zwischen einem Lagerplatz des Geräts und der zu reinigenden Vulkanisationsform sowie das Bewegen des Gelenkarms gewährleisten;
- Mittel zur Kommunikation mit einer Steuereinheit, die ihm eine Reinigungsauftragsanweisung für eine Vulkanisationsform übermittelt;
- Sensoren, um den Platz der zu reinigenden Form zu identifizieren, und ein Steuersystem, das ein Navigationssystem verwendet;
- wobei das Steuersystem mit den Sensoren verbunden ist, um die Position des Geräts zu justieren und den Platz der zu reinigenden Form und gegebenenfalls die Gegenstände auf seiner Bahn, wenn es sich zwischen einem Lagerplatz des Geräts und dem Platz der zu reinigenden Form bewegt, zu detektieren;
- einen Speicher zur Speicherung digitaler Daten;
- ein Bedienmodul, welches das Betätigen seiner Komponenten in Abhängigkeit von der von der Steuereinheit empfangenen Anweisung ermöglicht.

10. Gerät nach Anspruch 9, **dadurch gekennzeichnet, dass** das Bedienmodul einen Prozessor umfasst, der, wenn er eine Reinigungsauftragsanweisung von der Steuereinheit empfängt, dazu programmiert ist:
- den Stromladestand seiner Batterien und den Trockeneisfüllstand seines Tanks zu überprüfen,
- dem Gerät zu ermöglichen, seinen Lagerplatz zu verlassen; und
- automatisch zu dem Platz der zu reinigenden Form zu navigieren; und
- die Umgebung, in der sich die Vulkanisierpresse mit der zu reinigenden Form befindet, und gegebenenfalls Hindernisse automatisch zu scannen; sowie
- die Vulkanisierpresse mit der zu reinigenden Form automatisch zu identifizieren und sich in deren Nähe zu positionieren; und
- die Vulkanisationsform automatisch zu reinigen, indem der die Sprühdüse tragende Arm gemäß einer Menge von Anweisungen in das Innere der Form geführt wird, so dass sie mit Trockeneis gereinigt wird; und
- mit der Steuereinheit zu kommunizieren, um sie über den Fortschritt des Reinigungsvorgangs zu informieren.

11. Gerät nach einem der Ansprüche 9 oder 10, **dadurch gekennzeichnet, dass** es Mittel zur Kommunikation mit mindestens einer Bedienperson umfasst.

12. Gerät nach einem der Ansprüche 9 bis 11, **dadurch gekennzeichnet, dass** es Mittel zur Kommunikation mit einem Steuerungsautomaten einer Vulkanisierwerkstatt umfasst, in der sich die Vulkanisierpresse mit der zu reinigenden Form befindet.

13. Gerät nach einem der Ansprüche 9 bis 12, **dadurch gekennzeichnet, dass** es Mittel zur Identifizierung seines Platzes bei der Vulkanisierpresse mit der zu reinigenden Form und Mittel zum Anschließen an eine Stromladesteckdose und an eine Druckluftsteckdose, die an den Sockel der Presse angrenzen, umfasst.

14. Gerät nach einem der Ansprüche 9 bis 13, **dadurch gekennzeichnet, dass** es Sensoren zum Messen des Trockeneisfüllstands des Tanks aufweist, die mit dem Steuersystem verbunden sind, das eine Anweisung an das Bedienmodul zum Zurückkehren des Geräts an seinen Lagerplatz sendet, sobald der Trockeneisfüllstand des Tanks unter einen vorbestimmten Grenzwert gesunken ist.

15. Gerät nach einem der Ansprüche 9 bis 14, **dadurch gekennzeichnet, dass** es Mittel zum Abblasen oder Absaugen der Reinigungsrückstände umfasst.

## Claims

1. Method for cleaning a vulcanization mould for tyres in a curing press, using a device comprising a collaborative mobile robot (10), incorporating a computer program, said robot comprising an autonomous mobile platform (2) mounted on drive wheels and comprising batteries supplying electricity, a dry ice dispenser (6), sensors for identifying the location of the mould to be cleaned and motors ensuring the displacement thereof between a storage location of the device and the mould to be cleaned and the displacement of an articulated mobile arm (3) of said robot, said arm bearing a nozzle (4) for spraying dry ice coming from said dispenser, wherein the device comprises means for communication with a control unit for performing the following operations:
- after having received a mission instruction to clean a vulcanization mould and after having checked the level of electrical charge of its batteries and the level of dry ice in a tank (61) of said dispenser, leaving its storage location;
- automatically navigating to the location of the mould to be cleaned;
- automatically scanning the environment in which the curing press comprising the mould to be cleaned, and possible obstacles, are located;
- automatically identifying the curing press comprising the mould to be cleaned and standing in proximity thereto;
- automatically cleaning the vulcanization mould by directing the arm bearing the spray nozzle (4), according to a set of instructions, to the interior of the mould so as to clean it with dry ice;
- communicating with the control unit to inform it of the progress of the cleaning operation.

2. Method according to the preceding claim, **characterized in that** said device communicates with at least one operator.

3. Method according to one of Claims 1 and 2, **characterized in that** said device communicates with a controller controlling a curing shop in which the curing press comprising the mould to be cleaned is located.

4. Method according to one of the preceding claims, **characterized in that**, after having received the information that the cleaning of the vulcanization mould is finished, the control unit sends a new vulcanization mould cleaning mission instruction to said device.

5. Method according to one of the preceding claims, **characterized in that**, after having identified the curing press comprising the mould to be cleaned, the device connects to an electrical charging outlet and to a compressed air outlet that are contiguous to the plinth of the curing press.

6. Method according to one of the preceding claims, **characterized in that** it comprises a step in which said device returns to its storage location as soon as the level of dry ice in the tank has fallen below a predetermined limit.

7. Method according to Claim 6, **characterized in that** said device automatically recharges its tank with dry ice.

8. Method according to one of the preceding claims, **characterized in that** it comprises a step of blowing or sucking cleaning residues.

9. Cleaning device capable of cleaning a tyre vulcanization mould in a curing press comprising:
- a collaborative mobile robot (10) incorporating a computer program, said robot comprising an autonomous mobile platform (2) mounted on drive wheels and comprising batteries supplying electricity;
- a dry ice dispenser (6) linked to a spray nozzle (4) borne by an articulated mobile arm (3) of said robot;
- motors ensuring its displacement between a storage location of the device and the vulcanization mould to be cleaned and the displacement of said articulated arm;
- means for communication with a control unit which transmits to it a vulcanization mould cleaning mission instruction;
- sensors for identifying the location of the mould to be cleaned and a control system using a navigation system;
- said control system being linked to said sensors to adjust the position of the device and detect the location of the mould to be cleaned and possibly the objects on its path when it moves between a storage location of the device and the location of the mould to be cleaned;
- a digital data storage memory;
- a control module which allows its components to be actuated according to the instruction received from the control unit.

10. Device according to Claim 9, **characterized in that** said control module comprises a processor which, when it receives a cleaning mission instruction from said control unit, is programmed to:
- check the level of electrical charge of its batteries and the level of dry ice in its tank,
- allow the device to leave its storage location; and
- automatically navigate to the location of the mould to be cleaned; and
- automatically scan the environment in which the curing press comprising the mould to be cleaned, and possibly obstacles, are located; and
- automatically identify the curing press comprising the mould to be cleaned and stand in proximity thereto; and
- automatically clean the vulcanization mould by directing the arm bearing the spray nozzle, according to a set of instructions, to the interior of the mould so as to clean it with dry ice; and
- communicate with the control unit to inform it of the progress of the cleaning operation.

11. Device according to one of Claims 9 or 10, **characterized in that** it comprises means for communication with at least one operator.

12. Device according to one of Claims 9 to 11, **characterized in that** it comprises means for communication with a controller controlling a curing shop in which the curing press comprising the mould to be cleaned is located.

13. Device according to one of Claims 9 to 12, **characterized in that** it comprises means for identifying its location with respect to the curing press comprising the mould to be cleaned and means for connecting to an electrical charging outlet and a compressed air outlet that are contiguous to the plinth of the press.

14. Device according to one of Claims 9 to 13, **characterized in that** it comprises sensors for measuring the level of dry ice in the tank which are linked to said control system, which sends an instruction to the control module to return the device to its storage location as soon as the level of dry ice in the tank has fallen below a predetermined limit.

15. Device according to one of Claims 9 to 14, **characterized in that** it comprises means for blowing or sucking cleaning residues.
